# EUROPEAN PATENT APPLICATION

(11) **EP 1 841 051 A2**
(43) Date of publication of application: **03.10.2007**
(21) Application number: 07105216.1
(22) Date of filing: 29.03.2007
(51) Int. Cl.: H02M 7/48

(54) **Power generation system and method**

(30) Priority: 30.03.2006 US 277962
(71) Applicant: General Electric Company, Schenectady, NY 12345 (US)
(72) Inventor: Teichmann, Ralph, Albany, NY 12210 (US)
(74) Representative: Illingworth-Law, William Illingworth

(57) **Abstract**

A power generation system (10) includes a grid converter (12) configured to convert AC power from a grid into grid-originated DC power (16). The power generation system (10) also includes a source converter (20) configured to convert power from a source (22) into source-originated DC power (24). An intermediate bus (26) is configured to receive the grid-originated DC power and the source-originated DC power; and an output converter (28) is coupled to the intermediate bus and configured to provide output power. In the power generation system (10) a number of phases of the grid-originated DC power is different from a number of phases of the output power.

## Description

### BACKGROUND

The invention relates generally to the field of power generation and techniques for converting grid-originated power.

Typically power transmission is single-phase or three-phase. Although single-phase power is more prevalent in many places in the world, three-phase power is still desired for many different types of applications. Three-phase power enables a direct power conversion from electrical to mechanical rotating power through electric motors. Three-phase electric motors are generally more robust and powerful than single-phase machines r.

Applications for three-phase power typically include different types of motor loads. Additionally, there are resistive and non-motor load types of three-phase power applications that include lasers, computer equipment, ovens, welders, plasma cutters, and battery chargers, for example. There are also combinations of motor and non-motor load applications for three-phase power that include refrigerators, CNC (computer numerical control) mills, and EDM (electrical discharge machining) machines, for example.

Most residential homes do not have access to three-phase electric power at a reasonable price because three-phase power from a utility company is expensive or not available easily. When powering of three-phase loads is needed in such situations, a phase-converter is installed for converting single-phase power to three-phase power.

Another application for three-phase power is in rural areas. Long power lines in rural or remote areas are typically single-phase power lines to decrease installation costs. Load levels and types in rural areas generally require a three-phase system. For example, farms use large rotating machines that are preferably operated at three-phase power. The power quality (voltage stability) at systems fed by long lines and single-phase power, which must be converted into three-phase power, is sometimes low due to which power outages may occur.

As discussed above, conventional solutions to provide three-phase power from single-phase power include using an additional generator-motor set to convert single-phase grid supply into three-phase power supply. In many embodiments, a solid-state power converter is used that is a dedicated phase-converter and needs to be installed separately. Thus these solutions involve installment of extra components that lead to additional costs. If a local generation unit is present (for example, a stand-by generator), the systems are connected at the AC (alternating current) side and are unable to provide an integrated phase conversion.

Therefore there is a need for an integrated, low-cost solution for converting single-phase power to three-phase power.

### BRIEF DESCRIPTION

In an exemplary embodiment a power generation system includes a grid converter configured to convert AC power from a grid into grid-originated DC power; a source converter configured to convert power from a source into source-originated DC power; an intermediate bus configured to receive the grid-originated DC power and the source-originated DC power; and an output converter coupled to the intermediate bus and configured to provide output power. Here a number of phases of the grid-originated DC power are different from a number of phases of the output power.

In another aspect a method for generating three-phase power from single-phase power is provided. The method includes providing a renewable energy system; converting single-phase power to converted DC power; and supplying the converted DC power to the intermediate bus. The renewable energy system includes a renewable energy source, a source converter coupled to the renewable energy source and configured to convert power from the source into source-originated DC power, an intermediate bus configured to receive source-originated DC power from the source converter, and an output converter coupled to the intermediate bus and configured to provide three-phase output power;

### DRAWINGS

These and other features, aspects, and advantages of the present invention will become better understood when the following detailed description of embodiments, provided by way of example only, is read with reference to the accompanying drawings in which like characters represent like parts throughout the drawings, wherein:
FIG. 1 is a diagrammatic representation of an exemplary power generation system in accordance with one embodiment;
FIG. 2 is a diagrammatic representation of an exemplary passive grid converter for use in the system of FIG. 1;
FIG. 3 is a flowchart representation of exemplary steps for power flow using the passive grid converter of FIG. 2;
FIG. 4 is a diagrammatic representation of an exemplary active grid converter for use in the system of FIG. 1;
FIG. 5 is a flowchart representation of exemplary steps for power flow using the active grid converter of FIG. 4;
FIG. 6 is a diagrammatic representation of an exemplary power generation system in accordance with another embodiment using a controller;
FIG. 7 is a diagrammatic representation of an exemplary power generation system using a wind turbine generator in accordance with yet another embodiment; and
FIG. 8 is a diagrammatic representation of an exemplary power generation system for generating single-phase supply from three-phase supply in accordance with another embodiment.

### DETAILED DESCRIPTION

Embodiments of the present invention may be used to provide a stable three-phase power supply, in terms of voltage and frequency, from a single-phase grid or alternatively to provide a stable single-phase power supply from a three-phase power supply. Embodiments of the present invention may additionally be used to provide a phase conversion with a minimum of additional parts. It may be noted that the terms AC and DC used herein refer to the alternating current and direct current respectively.

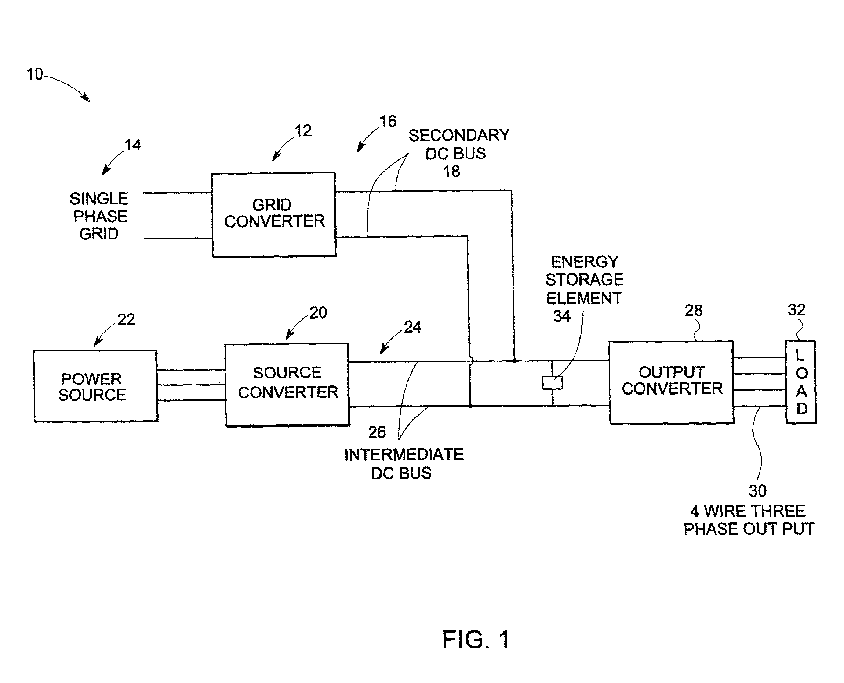

FIG. 1 is a diagrammatic representation of a power generation system 10. The system 10 includes a grid converter 12 configured to rectify or convert AC power from a grid 14 into grid-originated DC power, shown generally by reference numeral 16. The grid-originated DC power 16 is supplied to a secondary bus 18. It may be noted that in the exemplary embodiment the grid is a single-phase grid. The system 10 further includes a source converter 20 configured to convert power from a source 22 into source-originated DC power, shown generally by reference numeral 24. The source converter 20 is an active or passive AC to DC converter.

The energy source 22 as illustrated in FIG. 1, is an electrical generator configured to supply power locally, and in an exemplary embodiment is a renewable energy source, for example a wind generator, a solar cell, a photovoltaic cell, a water source, a geothermal source, a biomass based source, or a solid waste based source. In another example the source is a distributed renewable energy generation source. In the distributed embodiment more than one renewable power generation source may be employed. The multiple power sources are directly in directly connected to the source-originated DC power bus 24. For the direct connection no source converter is needed. For an indirect connection a source converter is needed linking each power generation source to the source-originated dc bus.

Referring to FIG. 1, an intermediate bus 26 is configured to receive the grid-originated DC power 16 and the source-originated DC power 24. The system further includes an output converter 28 coupled to the intermediate bus 26 and configured to provide output power 30. The output converter is a DC to AC converter. In one example, the output power 30 is coupled to a load 32 and the output converter 28 is configured to deliver AC power to the load 32. The load 32 is thus configured to receive the three-phase power supply via a three-wire or a four-wire system. Load 32 may comprise, for example, a single load of the types described in the background above or may comprise an output grid that is configured to supply power to multiple loads. The output grid, for example, may be used in remote areas such as farms where several pieces of farm equipment may need three-phase supply. It may be noted that the intermediate bus 26, the source converter 20, and the output converter 28 are often integral within of power conversion equipment that already exists along with the energy source 22.

The source converter 20 as illustrated in FIG. 1 may be configured for controlling shares of source-originated and grid-originated power being provided to the output converter 28. Typically the number of phases of the grid-originated power are different from number of phases of the output power. In the exemplary embodiment of FIG. 1, the grid-originated power is single-phase whereas the output power is three-phase power.

The system 10 may also include an energy storage element 34 configured to balance an instantaneous power difference between the power supplied to the load 32 and the power supplied from the grid (grid-originated DC power 16) or the power supply source (source-originated DC power 24) with the "or" meaning that the balancing is relative to whatever power is being supplied whether from the source, the grid, or both the source and the grid. Some non-limiting examples of the energy storage element 34 include a capacitor, an inductor, a battery, or a mechanically coupled energy storage element, for example a flywheel or a combination thereof. In one exemplary implementation, the energy storage element 34 is configured to supply the output power during transient conditions when the output power required, for example from the load 32, is more than power generated by the source 22. Transient conditions as used herein imply a short-time interval lasting for a few seconds or a few minutes when the power requirement at the output starts to increase over the power generated by the source 22.

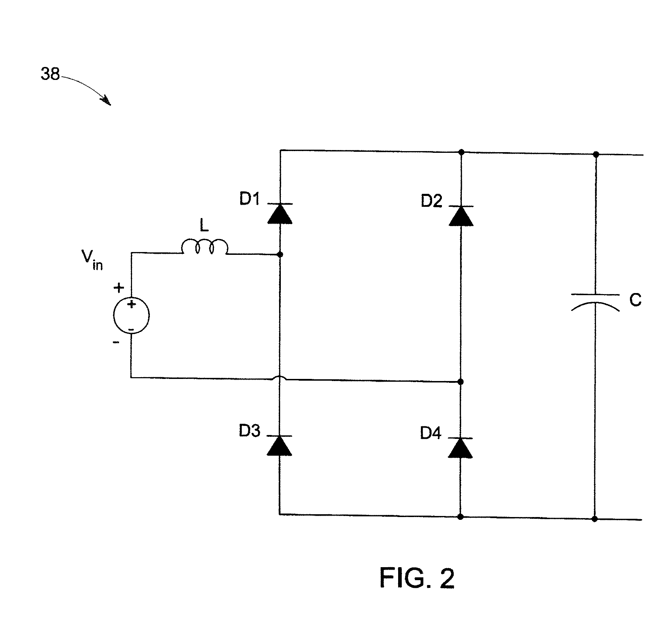

FIG. 2 is a diagrammatic illustration of a passive converter 38 comprising a single-phase rectifier, which is used as a grid converter 12 (shown in FIG. 1) in an exemplary implementation. D1, D2, D3 and D4 are diodes, C is a capacitor, and L is an inductor. Various configurations of passive converters are commercially available.

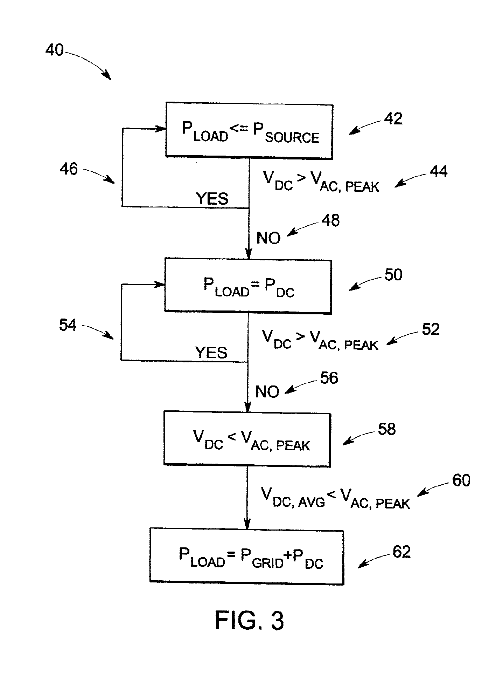

FIG. 3 is a flowchart 40 showing exemplary steps for flow of power from grid 14 or source 22 to the load 32 of FIG. 1, when the grid converter is a passive converter 40 as shown in FIG. 2. It will be well appreciated by those skilled in the art that the use of grid power is based on the difference between the power generated by the source (P_{Source}) and the power required by the load (P_{Load}). The system is designed such that grid power is only used when the power required by the load exceeds the power generated by the source. Also, when the grid converter is passive it automatically sends the power from the grid if the voltage in the intermediate bus is less than the grid voltage, and it stops supplying any power from the grid if the voltage in the intermediate bus is more than the grid voltage and thus the load is fully sustained by power generated by the source.

Referring to flowchart 40, as long as the load power requirement is less than or equal to the power generated at the source as shown in step 42 and the voltage in the intermediate bus (V_{DC}) is more than the grid voltage (V_{AC, Peak}), as shown by reference numeral 44, the source-originated DC power (P_{Source}) is supplied to the load as shown in the loop designated by reference numeral 46. When the load requirement increases, then, in a transition condition as indicated by arrows 48 and 54, the power (P_{DC}) is supplied from the energy storage element as shown in step 50. When the energy storage element is depleted as shown by arrow 56 and the voltage in the intermediate bus (V_{DC, AVG}) is less than the grid voltage (V_{AC, Peak}) as shown by step 58 and arrow 60, the grid converter supports the source-originated DC power with the grid-originated DC power (P_{Grid}) as shown in step 62.

In implementations where the grid converter is passive and source converter is also passive, the source converter is configured to supply to the load the source-originated DC power when DC voltage in the intermediate bus is higher than grid voltage across the grid converter. For such systems, the transition from source to grid or vice-versa is done automatically by the design (with a pre-setting at what voltage the grid would start supplying power) of the components and not during operation.

In implementations where the grid converter is passive and source converter is active, the source converter is configured to regulate DC voltage in the intermediate bus when the output power requirement is less than the source-originated DC power. For a system with a passive grid converter and an active source converter, the source converter may be operated to control the magnitude of DC voltage on the intermediate bus as long as the source-originated power is higher than the power required by the load. In one configuration, the DC voltage on the intermediate bus is almost constant and does not change much with the generator speed. However, by a small variation of DC voltage is possible to control power flow from the grid by setting the source originated dc voltage above or below a peak value of the grid voltage.

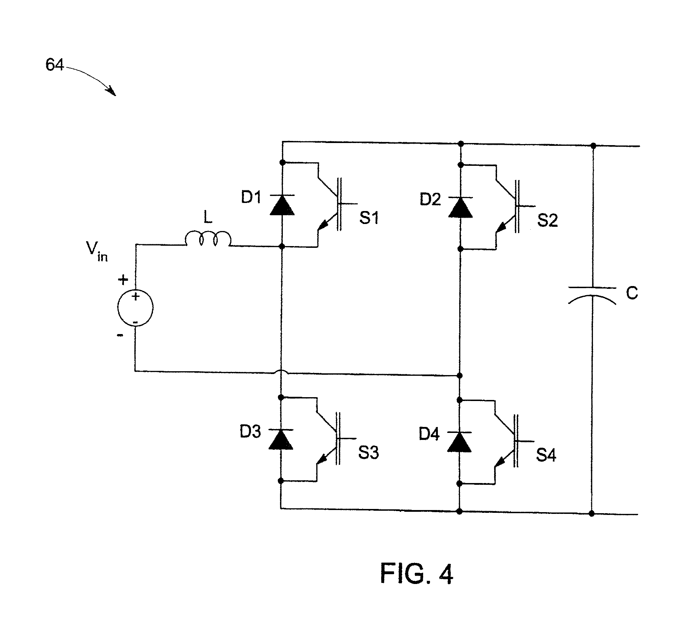

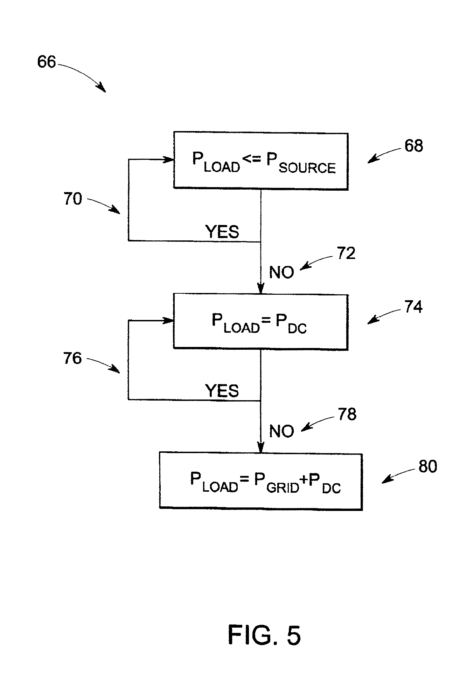

In another exemplary implementation, the grid converter is an active converter 64 as shown in FIG. 4. D1, D2, D3, D4 are diodes, S1, S2, S3, S4 are switches, C is a capacitor, and L is an inductor. Various configurations of active converters are commercially available. In the active embodiment, active control is used to control the shares of power taken from the source and the grid. Ideally the load would still primarily take the power from the source. This is illustrated in the steps of flowchart 66 in FIG. 5.

Referring to FIG. 5, as in the case of the passive grid converter, as long as the load requirement (P_{Load}) is less than or equal to the power generated at the source (P_{Source}) as shown in step 68, the source-originated DC power is supplied to the load as shown by arrow 70. When the load requirement increases, then, in a transition condition as indicated by arrows 72 and 76, the power is supplied from the energy storage element (P_{DC}) as shown in step 74. When the energy storage element is depleted as shown by arrow 78 and the power requirement by the load is more than the source-originated power, then a controller may optionally be used to gradually add power from the grid (P_{Grid}) as shown in step 80. The controller is thus configured to select the source-originated DC power or the grid-originated DC power in an exemplary implementation. It may be noted that, unlike the embodiment with a passive grid converter where the power from the source does not go back into the grid, in the active grid converter embodiment excess power at the source could be transferred into the grid.

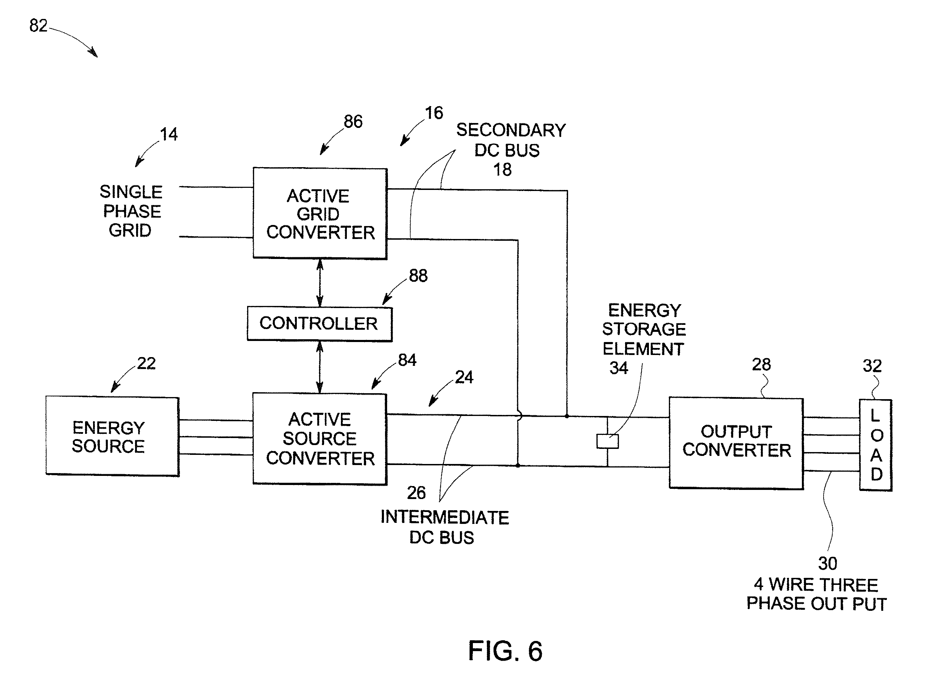

FIG. 6 is a diagrammatic representation of another implementation of a power generation system 82 using an active source converter 84 and an active grid converter 86. In this case a control algorithm implemented via software in a controller 88 may be used for controlling the shares of source-originated power and grid-originated power. In one example, full power of the source will first be exhausted and, if that is insufficient, the grid will support the remaining power needs of the load. The controller 88 is configured to feed the necessary control signals into the source and grid converters. The other elements shown in FIG. 6 have the same function as explained in reference to FIG. 1.

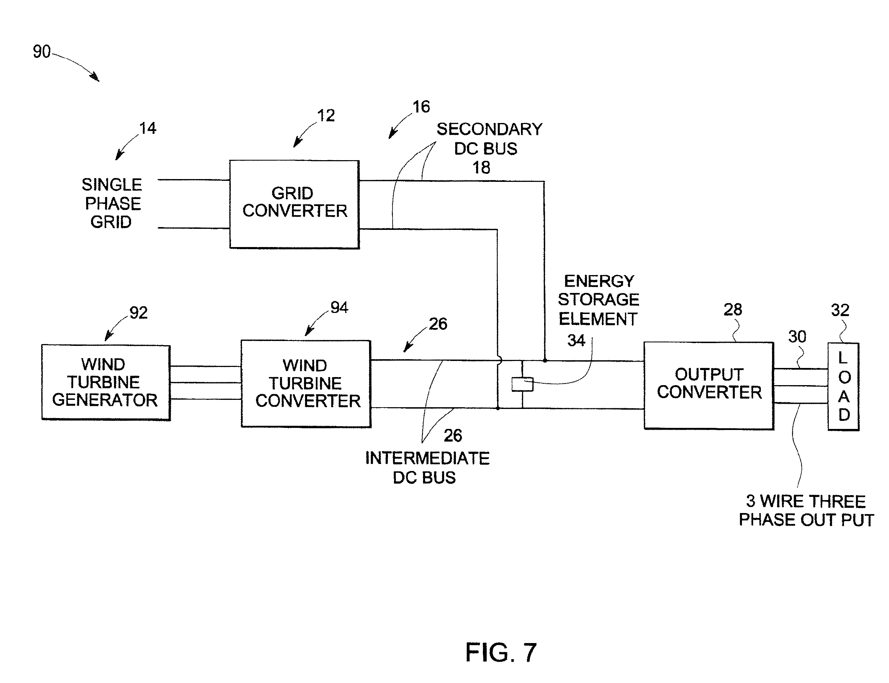

FIG. 7 is a diagrammatic representation of a wind energy system 90 including a wind turbine generator 92 to convert the mechanical energy from the wind turbine blades into electrical energy or power that is sent to the intermediate bus 26 via a wind turbine converter 94. The other elements shown in FIG. 7 have the same function as explained in reference to FIG. 1.

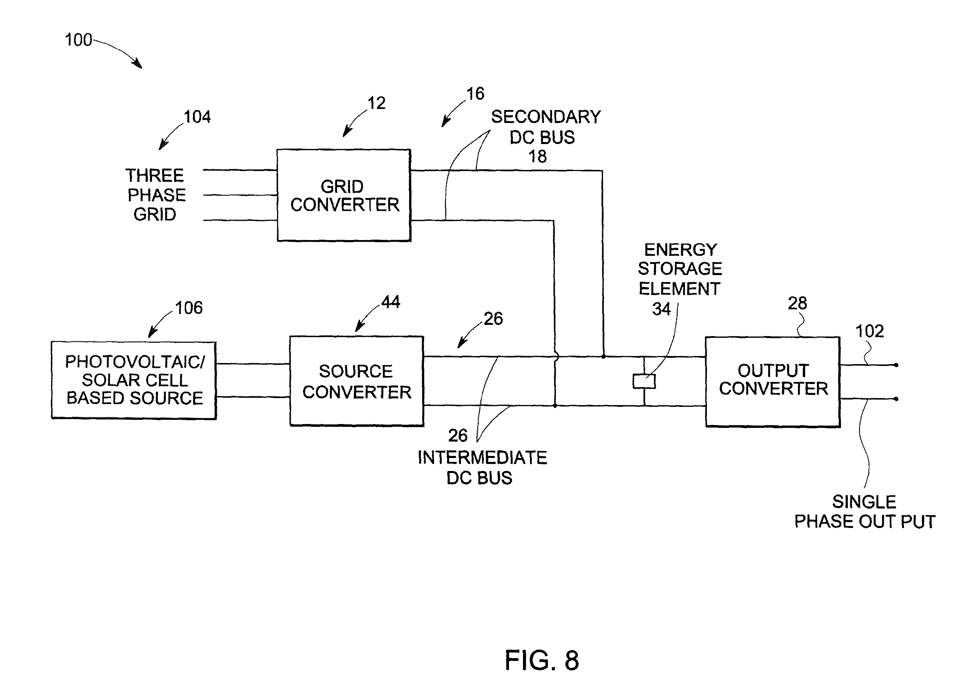

FIG. 8 is a diagrammatic representation of another exemplary implementation of the invention. As illustrated, an power generation system 106 generates a single- phase power output shown generally by reference numeral 102 by using power from a three-phase grid 104 or any renewable energy source, for example a photovoltaic or a solar cell based source 106. The other elements shown in FIG. 8 have been explained herein above in reference to FIG. 1. One exemplary implementation may be in households where single-phase power is used.

The various embodiments described herein may be used with infrastructure already existing in a power generation unit, specifically the DC to AC converter, and thus may minimize extra cost needed for a phase converter. The output voltage and frequency of the output power is stable, and the embodiments described herein can be used in 50 Hz or 60 Hz markets without modification. A bypass option allows a supply of grid power directly to the load if the power conversion equipment fails or if the power requirement exceeds than what is being supplied by the energy source.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A power generation system (10) comprising:
a grid converter (12) configured to convert AC power from a grid (14) into grid-originated DC power (16);
a source converter (20) configured to convert power from a source (22) into source-originated DC power (24);
an intermediate bus (26) configured to receive the grid-originated DC power ( 16) and the source-originated DC power (24); and
an output converter (28) coupled to the intermediate bus (26) and configured to provide output power (30),
wherein a number of phases of the grid-originated DC power is different from a number of phases of the output power.

2. The system of claim 1 wherein the source converter (20) is configured for controlling shares of source-originated and grid-originated DC power being provided to the output converter (28).

3. The system of claim 1 further comprising an energy storage element (34) configured to balance an instantaneous power difference between the source-originated or grid-originated DC power and power supplied to a load (32) coupled to the output converter (28), wherein the energy storage element (34) is configured to supply the output power during transient conditions when the output power required is more than power generated by the source.

4. The system of claim 1 wherein the grid converter (12) comprises a passive converter (38).

5. The system of any one of the preceding claims, wherein the grid converter (12) is configured to support the source-originated DC power when DC voltage in the intermediate bus is lower than grid voltage across the grid converter.

6. The system of any one of the preceding claims, wherein the source converter (20) comprises a passive converter, and wherein the source converter is configured to provide to the output converter the source-originated DC power when DC voltage in the intermediate bus is higher than grid voltage across the grid converter.

7. The system of any one of the preceding claims, wherein the source converter (20) comprises an active converter, and wherein the source converter is configured to regulate DC voltage in the intermediate bus (26) when the output power required is less than the source-originated DC power.

8. The system of claim 1 wherein the grid converter (12) comprises an active converter (84).

9. The system of any one of the preceding claims, 8 further comprising a controller (88) coupled to the grid converter (86) and the source converter (84) and configured to control the shares of source-originated and grid-originated DC power being provided to the output converter (28).

10. The system of any one of the preceding claims, wherein the source-originated DC power (24) is used when the output power required is less than power generated by the source.

11. The system of any one of the preceding claims, wherein the grid-originated DC power (16) is added when the output power required is greater than power generated by the source.

12. The system of claim 1 wherein the power source is at least one of a wind generator, a solar cell, a photovoltaic cell, a battery, a water source, a geothermal source, a biomass based source, a solid waste based source, and a distributed renewable energy generation source comprising multiple renewable power generation sources.
